# EUROPÄISCHE PATENTSCHRIFT

(11) **EP 0 843 246 B1**
(45) Veröffentlichungstag und Bekanntmachung des Hinweises auf die Patenterteilung: **16.02.2000**
(21) Anmeldenummer: 97119745.4
(22) Anmeldetag: 11.11.1997
(51) Int. Cl.: G05D 7/00, B29C 67/20, B29D 23/00, B01F 5/00, B29C 44/34

(54) **Durchflussregelung**
FLOW REGULATOR
REGULATEUR DE DEBIT

(30) Priorität: 12.11.1996 DE 19646665
(43) Veröffentlichungstag der Anmeldung: 20.05.1998
(73) Patentinhaber: Linde Aktiengesellschaft, 65189 Wiesbaden (DE); Elastogran GmbH, 49440 Lemförde (DE)
(72) Erfinder: Klane, Bernd, Dipl.-Ing., 81234 München (DE); ADOLF HERBERT, D-82387 Antdorf (DE); LISKER, NORBERT, D-82515 WOLFRATSHAUSEN (DE)
(74) Vertreter: Kasseckert, Rainer

(56) Entgegenhaltungen:
- EP-A- 0 286 015
- DE-A- 4 305 866
- US-A- 4 211 523

## Beschreibung

Die Erfindung betrifft ein Verfahren zum Dosieren von kompressiblen Fluiden, insbesondere von Treibmitteln wie N₂ oder CO₂, wobei dem im Verbraucher (Extruder, RIM-Maschine oder Doppelbandanlage) geförderten Trägermaterial das Treibmittel mit hohem Druck zugeführt wird und die Menge des Treibmittels mit einem Druckregelventil geregelt wird, welches die Druckdifferenz über einer starren Drossel konstant halten kann.

Bekannte Verfahren zur Herstellung aufgeschäumter Kunststoffe verwenden Treibmittel, die unter Normalbedingungen gasförmig vorliegen und die mit hohem Druck einer plastischen, meist thermisch erweichten Kunststoffmasse zugeführt und mit dieser homogen vermischt werden. Bei der anschließenden Entspannung dieses Gemisches auf Normaldruck tritt eine durch das Treibmittel hervorgerufene Aufschäumung des Kunststoffs ein.

Der geschmolzene Kunststoff wird in dem Extruder mittels Schneckengewinden zu einer Austrittsdüse gefördert. An einer bestimmten Stelle des Extruders wird das flüssige Treibmittel zugegeben, das sich mit dem Kunststoff auf dem Weg zur Austrittsdüse vermischt. Um die Produktionsqualität bei diesem Verfahren unverändert aufrechtzuerhalten, müssen die Massenströme von Treibmittel und Kunststoff jeweils konstant und zueinander proportional bleiben. Andernfalls wird der aus der Düse extrudierte Kunststoff unterschiedlich stark aufgeschäumt. Produktionsfehler und Ausschuß sind die Folge, die den Herstellungsprozeß unrentabel machen würden.

Die Anforderung, der Kunststoffmasse einen genau dosierten Treibmittelstrom zuzuführen, wird bisher für Flüssigkeiten mittels Dosierpumpen gelöst. Da in zunehmendem Maße auch verdichtete Inertgase als Treibmittel Verwendung finden, müssen für diese neue Dosiereinrichtungen eingesetzt werden. Üblicherweise werden solche Inertgase mittels eines Stellventils in flüssiger oder überkritischer Phase dosiert. Das Stellventil wird dabei mittels eines vorgeschalteten Druckminderers mit einem konstanten Vordruck versorgt. Der Hinderdruck des Stellventils ist durch den Massedruck der Kunststoffschmelze gegeben. Sinkt z.B. dieser Massedruck ab, muß der Treibmittelfluß durch das Stellventil gedrosselt werden. Während des Extruderbetriebes betragen die Druckschwankungen hinter dem Stellventil bis zu etwa 10 bar. Diese Druckschwankungen des Massedrucks müssen ständig vom Stellventil ausgeglichen werden, was einen bestimmten Mindeststellbereich dieser Stellventile erfordert.

Bei einer RIM-Maschine (Reaction-Injection-Moulding) oder einer Doppelbandanlage wird einem Reaktionsgemisch oder einer einzelnen Reaktionskomponente das Treibmittel in einem genauen Massenverhältnis zudosiert.

Bekannt ist aus dem Prospekt "Maximator® G/D-Technik" der Schmidt, Kranz & Co. GmbH, Zorge/Harz, Gasdosiersysteme, bei denen die Gasmenge von einem hochdynamischen Druckregelventil geregelt wird. Dieses Druckregelventil kann die Druckdifferenz über eine starre Drossel kontant halten, wodurch Druckschwankungen des Verbrauchers kompensiert werden. Vorteilhaft dabei ist, daß die Eliminierung von Störungen durch Druckschwankungen sehr schnell (in der Regel < 1 s) erfolgen kann. Nachteilig ist, daß der Bediener hier keinen Durchfluß vorgeben kann, sondern nur einen bestimmten Druck. Eine Drift wird dadurch nicht verhindert.

Aus der DE 43 05 866 ist ein Gasdosierverfahren bekannt, bei dem der Druck hinter dem Stellventil mittels eines Druckhalteventils konstant gehalten und die Menge des Treibmittels direkt in Abhängigkeit von der geförderten Kunststoffmasse geregelt wird. Diese Lösung hat den Vorteil, daß der Bediener den Durchfluß vorgeben kann, der dann eingeregelt wird. Nachteilig dabei ist, daß die Eliminierung von Störungen durch Druckschwankungen nur relativ langsam (> 10 s) ausgeregelt werden kann.

Aufgabe der Erfindung ist es daher, ein Verfahren zur Dosierung von kompressiblen Fluiden vorzuschlagen, bei dem während des gesamten Dosierbetriebes der gewünschte Treibmittelfluß zuverlässig zum Verbraucher gelangt und damit die Qualität der Endprodukte zeitlich unverändert bleibt.

Diese Aufgabe wird erfindungsgemäß dadurch gelöst, daß die Druckdifferenz in Abhängigkeit des Durchflusses (x) des Treibmittels geregelt wird.

Die Druckdifferenz über der Drossel wird also im Gegensatz zum Stand der Technik nicht konstant gehalten, sondern von einem Durchflußregler bestimmt.

In einer bevorzugten Ausführung wird der Druck nach der Beziehung P₁=P₂+Δp durch das Druckregelventil eingestellt, wobei P₂ der Druck hinter der Drossel ist, Δp proportional dem Stellgrad y des Durchflußreglers ist und eine Funktion von (x - w), wobei x der aktuelle Durchfluß und w der Sollwert des Durchflusses ist. Δp wird also von einem stetig arbeitenden Regler mit PI-Verhalten ermittelt aus der Abweichung des aktuellen Durchflusses vom vorgegebenen Sollwert.

Die Erfindung erreicht folgende Vorteile: Drucksprünge und -schwankungen des Arbeitsdruckes P₂ werden schnell (< 1 s) kompensiert, ohne auf den Durchflußregler zu wirken. Somit bleibt der Stellgrad y des Durchflußreglers konstant. Der Regler ist nicht in der Gefahr in Regelschwingungen zu kommen. Die Regelstrecke erreicht durch diese Kombination erfindungsgemäß ein ungewöhnlich schnelles Regelverhalten, ohne deswegen zur Instabilität zu neigen.

Als Drossel kann eine Blende, ein Handventil oder ein Stellventil verwendet werden. Diese Drosselorgane weisen folgende Merkmale auf:

### Blende

- Vorteil:: Starr im Drosselverhalten ohne Drift, Fehleinstellung nicht möglich.
- Nachteil:: Der Arbeitsbereich einer Blende ist bezüglich verschiedener Durchflußmengen begrenzt.

### Handventil

- Vorteil:: Als Drossel variabel bezüglich verschiedener Durchflußmengen.
- Nachteil:: Über längere Zeit ist eine Drift vorhanden; es ist eine Fehleinstellung möglich.

### Stellventil

- Vorteil:: Arbeitsbereich bezüglich verschiedener Durchflußmengen ist groß. Über eine definierte Ansteuerung ist der Drosselwert reproduzierbar.
- Nachteil:: Höherer Aufwand für Steuerung und Ventil.

In einer bevorzugten Ausführung werden ein oder zwei PI-Regler verwendet, die durch eine speicherprogrammierbare Steuerung oder durch einen Prozeßregler dargestellt werden.

In einer weiteren Ausführung der Erfindung kann der Arbeitsdruck P₂ entweder direkt in der Leitung gemessen werden, oder er wird aus einer bereits bestehenden Prozeßgröße ermittelt. Bei Extrudern kann dies z.B. durch den Schmelzdruck erfolgen, bei RIM-Maschinen durch den Polyol- oder Isozyanatdruck.

Die Erfindung eignet sich insbesondere zur Herstellung von Kunststoffschäumen in Extrudern, RIM-Maschinen oder Doppelbandanlagen. Sie eignet sich aber ebenso zum Aufschäumen von Stärke, zum Einbringen von Treibmitteln in Flüssigkeiten, wie Lakken, Milch oder Kaffee, zum nachfolgenden Verdüsen. Ihre Anwendung ist stets dann günstig, wenn es darauf ankommt, ein kompressibles Fluid unter hohem Druck und mit hoher Genauigkeit in der Menge einem Trägermaterial zuzudosieren.

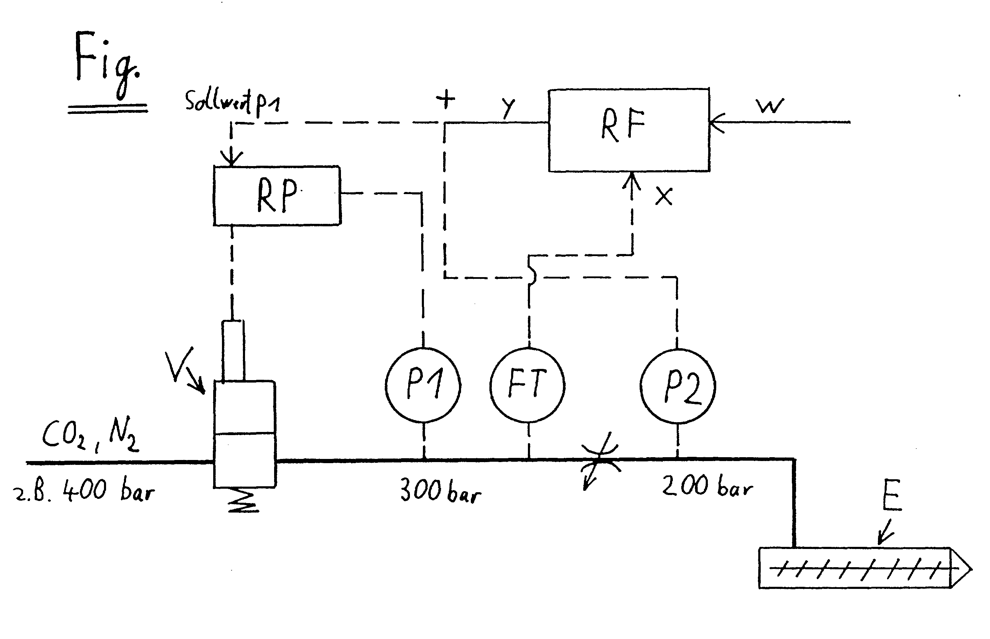

Weitere Vorteile, Merkmale und Ausgestaltungen der Erfindung sowie eine Vorrichtung zur Durchführung des erfindungsgemäßen Verfahrens ergeben sich aus dem nachfolgenden Ausführungsbeispiel, das anhand der einzigen Figur näher erläutert wird.

Die Figur zeigt eine erfindungsgemäße Durchflußregelung am Beispiel eines Extruders. Die Figur zeigt den Extruder E, der mittels einer Leitung mit Hochdruckgas versorgt wird. Vorgesehen ist dazu das Druckregelventil V, die Drossel D, die Regler RF für den Durchfluß und RP für den Druck, die Messgeräte P₁ und P₂ für den Druck vor der Drossel D und dahinter, sowie das Durchflußmeßgerät FT an einer beliebigen Stelle im Strang.

Die Funktion ist wie folgend: Vor dem Druckregelventil V, das z.B. ein schnellregelndes (hochdynamisches) 3/3-Wegeventil sein kann, steht der hohe Gasdruck von ca. 400 bar des Aufschäumgases, hier kann z.B. CO₂ oder N₂ verwendet werden. Dem Regler RF werden als Eingangsgrößen der Sollwert w und der Durchfluß x gegeben. Aus der Regelabweichung ermittelt der Regler RF den Stellgrad y z.B. in Form von einem Signal 0-10 V. Zu diesem Signal wird das Drucksignal von P₂ in Form von 0-10 V addiert. Aus der Addition ergibt sich der Sollwert für den Druckregler RP. Dieser setzt über das hochdynamische Druckregelventil V das Signal "Sollwert P₁" in den Druck P₁ um. Typische Einstellwerte sind ca. 200-300 bar für P₁ und 150-250 bar für P₂. Erfindungsgemäß wird der Druck P₁ nun nicht konstant eingestellt, sondern enthält ein Korrekturglied Δp, das eine Funktion der Differenz des aktuellen Durchflusses x vom Sollwertdurchfluß w ist.

## Patentansprüche

1. Verfahren zum Dosieren von kompressiblen Fluiden, insbesondere von Treibmitteln wie N₂ oder CO₂, wobei dem im Verbraucher (Extruder, RIM-Maschine, Doppelbandanlage) geförderten Trägermaterial ein Treibmittel mit hohem Druck zugeführt wird und die Menge des Treibmittels mit einem Druckregelventil (V) geregelt wird, welches die Druckdifferenz über einer starren Drossel (D) konstant halten kann, **dadurch gekennzeichnet**, daß die Druckdifferenz in Abhängigkeit vom Durchfluß (x) des Treibmittels geregelt wird.

2. Verfahren nach Anspruch 1, **dadurch gekennzeichnet**, daß der Druck hinter dem Druckregelventil (V) nach der Beziehung P₁=P₂+Δp eingestellt wird mit
P₂ = Druck hinter der Drossel (D)
Δp~y = F (x-w), proportional dem Stellgrad y des Reglers RF für den Durchfluß
x = aktueller Durchfluß
w = Sollwertdurchfluß.

3. Verfahren nach Anspruch 1 oder Anspruch 2, **dadurch gekennzeichnet**, daß ein oder zwei PI-Regler verwendet werden, die durch eine speicherprogrammierbare Steuerung oder einen Prozeßregler dargestellt werden.

4. Verfahren nach einem der vorhergehenden Ansprüche, **dadurch gekennzeichnet**, daß der Arbeitsdruck (P₂) entweder in der Leitung gemessen wird oder aus einer bereits bestehenden Prozeßgröße berechnet wird.

5. Anwendung eines Verfahrens eines der vorhergehenden Ansprüche zur Herstellung von Kunststoffschäumen, zum Aufschäumen von Stärke, zum Einbringen von Treibmitteln in Flüssigkeiten (Lacke, Milch, Kaffee usw.) zum nachfolgenden Verdüsen.

6. Vorrichtung zur Durchführung eines der vorhergehenden Verfahren, **gekennzeichnet durch** ein hochdynamisches Druckregelventil (V), eine Drossel (D), Druckmeßstellen (P₁, P₂) vor und hinter der Drossel (D), einen Durchflußmesser (FT), ein Additionsglied, einen Regler (RF) für den Durchfluß und einen Regler (RP) für den Druck.

## Claims

1. Method of metering compressible fluids, especially blowing agents such as N₂ or CO₂, a blowing agent being fed at high pressure to the carrier material conveyed in the end user (extruder, reaction injection moulding machine, double-band installation) and the amount of blowing agent being regulated using a pressure-regulating valve (V) which is able to keep the pressure difference across a fixed restrictor (D) constant, characterized in that the pressure difference is regulated as a function of the flow (x) of the blowing agent.

2. Method according to Claim 1, characterized in that the pressure downstream of the pressure-regulating valve (V) is set in accordance with the equation P₁ = P₂+Δp, where
P₂ = pressure downstream of the restrictor (D)
Δp~y = F(x-w), proportional to the regulation ratio y of the controller RF for the flow
x = actual flow
w = desired flow value.

3. Method according to Claim 1 or Claim 2, characterized in that one or two PI controllers are used, which are constituted by a programmable control system or a process controller.

4. Method according to one of the preceding claims, characterized in that the operating pressure (P₂) is either measured in the line or is calculated from a process variable which already exists.

5. Use of a method of one of the preceding claims for producing foamed plastics, for foaming starch, for introducing blowing agents into liquids (paints, milk, coffee and so on) for subsequent spraying.

6. Apparatus for implementing one of the preceding methods, characterized by a high-dynamics pressure-regulating valve (V), a restrictor (D), pressure measuring points (P₁, P₂) upstream and downstream of the restrictor (D), a flow meter (FT), an addition element, a controller (RF) for the flow and a controller (RP) for the pressure.

## Revendications

1. Procédé de dosage de fluides compressibles, en particulier d'agents moussants comme du N₂ ou du CO₂, le matériau de support sollicité dans le récepteur (extrudeuse, machine RIM, installation à double bande) étant alimenté sous haute pression par un agent moussant et la quantité d'agent moussant étant régulée par une vanne de régulation de pression (V), laquelle peut maintenir constante la différence de pression par un étranglement fixe (D), caractérisé en ce que la différence de pression est régulée en fonction du débit (x) de l'agent moussant.

2. Procédé suivant la revendication 1, caractérisé en ce que la pression en aval de la vanne de régulation de pression (V) est régulée suivant le rapport P₁=P₂+Δp dans lequel
P₂ = la pression en aval de l'étranglement (D)
Δp^{~}y = F(x-w), proportionnellement au taux de régulation y du régulateur RF pour le débit
x = débit actuel
w = valeur de consigne de débit.

3. Procédé suivant la revendication 1 ou la revendication 2, caractérisé en ce que l'on utilise un ou deux régulateurs PI, qui sont représentés par une commande de mémoire programmable ou par un régulateur de procédé.

4. Procédé suivant l'une des revendications précédentes, caractérisé en ce que la pression de travail (P₂) est, soit mesurée dans la conduite, soit calculée à partir d'une grandeur de procédé déjà existante.

5. Application d'un procédé d'une des revendications précédentes pour la préparation de mousses en matières plastiques, pour faire mousser de l'amidon, pour introduire des produits moussants dans des liquides (peintures, lait, café, etc.) pour une diffusion ultérieure par gicleur.

6. Dispositif pour la réalisation d'un des procédés précédents, caractérisé par une vanne de régulation de pression (V) hautement dynamique, un étranglement (D), des zones de mesure de pression (P₁, P₂) en amont et en aval de l'étranglement (D), un appareil de mesure de débit (FT), un élément d'addition, un régulateur (RF) pour le débit et un régulateur (RP) pour la pression.
